# EUROPÄISCHE PATENTSCHRIFT

(11) **EP 1 542 051 B1**
(45) Veröffentlichungstag und Bekanntmachung des Hinweises auf die Patenterteilung: **18.07.2007**
(21) Anmeldenummer: 04022249.9
(22) Anmeldetag: 17.09.2004
(51) Int. Cl.: G02B 21/00, G01J 3/44

(54) **Verfahren und Vorrichtung zum Trennen unterschiedlicher Emissionswellenlängen in einem Scanmikroskop**
Apparatus and method for wavelength separation in a scanning microscope
Procédé et système pour séparer des longueurs d'onde dans un microscope à balayage

(30) Priorität: 08.12.2003 DE 10357584
(43) Veröffentlichungstag der Anmeldung: 15.06.2005
(73) Patentinhaber: Leica Microsystems CMS GmbH, 35578 Wetzlar (DE)
(72) Erfinder: Seyfried, Volker, 69226 Nussloch (DE); Storz, Rafael, 69115 Heidelberg (DE)
(74) Vertreter: Naumann, Ulrich

(56) Entgegenhaltungen:
- DE-A1- 19 702 753
- PATENT ABSTRACTS OF JAPAN Bd. 014, Nr. 059 (P-1000), 2. Februar 1990 (1990-02-02) & JP 01 282515 A (TOKYO ELECTRON LTD), 14. November 1989 (1989-11-14)

## Beschreibung

Die vorliegende Erfindung betrifft ein Verfahren und eine Vorrichtung zum Trennen unterschiedlicher Emissionswellenlängen in einem Scanmikroskop, bei dem eine Probe mit einem mittels einer Strahlablenkeinrichtung über die Probe geführten Beleuchtungslichtstrahl abgetastet wird, wobei der Beleuchtungslichtstrahl unterschiedliche Anregungswellenlängen aufweist, und bei dem das von der Probe ausgehende Emissionslicht, das mit den Anregungswellenlängen korrespondierende Emissionswellenlängen enthält, in mindestens einem Detektor nachgewiesen wird.

Verfahren und Vorrichtungen der hier in Rede stehenden Art sind seit Längerem aus der Praxis bekannt und kommen insbesondere in der Fluoreszenzmikroskopie zum Einsatz. In der Fluoreszenzmikroskopie wird eine zu untersuchende Probe häufig mit mehreren Fluoreszenzfarbstoffen eingefärbt, so dass das Problem der Trennung der einzelnen Emissionswellenlängen hier von essentieller Bedeutung ist. Bei den bislang bekannten Verfahren beleuchtet man die Probe zunächst für eine gewisse Zeit mit einer ersten Anregungswellenlänge und nimmt Daten auf, um auf diese Weise eine erste Bildaufnahme der Probe zu erstellen. Sodann beleuchtet man die Probe für die gleiche Zeit mit einer zweiten Anregungswellenlänge und erhält eine zweite Bildaufnahme der Probe. Dieses Verfahren wird für alle Anregungswellenlängen der in der Probe enthaltenden Fluoreszenzfarbstoffe nacheinander durchgeführt, um so für jede Anregungswellenlänge ein eigenes Bild zu erhalten. Das Verfahren kann zeilenweise oder auch bildweise geschehen, was unter dem Namen "sequentieller Scan" bekannt ist.

Im Zusammengang mit dem bekannten sequentiellen Scan ist insbesondere nachteilig, dass zur Erzeugung der einzelnen Bilder die Probe mehrfach abgerastert werden muss. Dieser Vorgang ist äußerst zeitintensiv, da die Aufnahmegeschwindigkeit im Wesentlichen durch die Geschwindigkeit des Scanvorgangs begrenzt ist. So benötigt man zur Aufnahme von getrennten Bildern für zwei Anregungswellenlängen etwa die doppelte Zeit und für drei Anregungswellenlängen etwa die dreifache Zeit gegenüber der normalen Bildaufnahme. Die Bildrate im konfokalen Scanmikroskop reduziert sich dadurch signifikant.

Beim sequentiellen Scan ergeben sich darüber hinaus Probleme bei schnellen Bildveränderungen, z.B. aufgrund von auf einer kurzen Zeitskala innerhalb der Probe ablaufenden Prozessen. Beim Auftreten solch schneller Prozesse ergeben sich Unterschiede in den einzelnen Bildern, da die Bilder für unterschiedliche Anregungswellenlängen nicht zeitgleich aufgenommen werden. Dies ist insbesondere beim bidirektionalen zeilenweisen sequentiellen Scan kritisch, da hier nicht einmal eine feste Zeitrelation zwischen den einzelnen Pixeln vorliegt. Werden die so gewonnenen Bilddaten mit herkömmlichen Methoden weiterverarbeitet, z.B. durch Entfaltung oder Lineares Unmixing, so treten Artefakte in den verarbeiteten Bildern auf.

Aus Dokument DE19702753 A1 ist ein Scanmikroskop mit einer Lichtquelle zur Erzeugung eines Beleuchtungslichtstrahls mit unterschiedlichen Anregungswellenlängen 7₁, 7₂ bekannt, wobei eine Probe mit dem mittels einer Strahlablenkeinrichtung über die Probe geführten Beleuchtungslichtstrahl abtastbar ist.

Das Dokument JP01282515 zeigt ein Laserscanmikroskop, bei dem die Lichtstrahlen von drei Laserlichtquellen mit unterschiedlichen Anregungswellenlängen zu einem einzigen Beleuchtungslichtstrahl zusammengeführt werden, wobei der Beleuchtungslichtstrahl mittels einer Strahlablenkeinrichtung über eine zu untersuchende Probe geführt wird.

Der vorliegenden Erfindung liegt nun die Aufgabe zugrunde, ein Verfahren und eine Vorrichtung zum Trennen unterschiedlicher Emissionswellenlängen in einem Scanmikroskop der eingangs genannten Art mit einfachen Mitteln derart auszugestalten und weiterzubilden, dass eine erhöhte Aufnahmegeschwindigkeit für die Aufnahme von getrennten Bildern einer Probe für mehrere Anregungswellenlängen erreicht ist, so dass insbesondere auch schnell ablaufende Prozesse innerhalb der Probe fehlerfrei abbildbar sind.

Das erfindungsgemäße Verfahren zum Trennen unterschiedlicher Emissionswellenlängen in einem Scanmikroskop löst die voranstehende Aufgabe durch die Merkmale des Patentanspruchs 1.

Erfindungsgemäß ist zunächst erkannt worden, dass im Hinblick auf eine Reduktion der Geschwindigkeit der Bildaufnahme für mehrere Anregungswellenlängen beim Scanvorgang selbst angesetzt werden muss, da dieser die Geschwindigkeit der Bildaufnahme entscheidend vorgibt. Auf dieser Erkenntnis aufbauend ist sodann erkannt worden, dass alle zu untersuchenden Anregungswellenlängen in einem einzigen Scanvorgang verarbeitet werden können. Dazu werden erfindungsgemäß die Anregungswellenlängen dem Beleuchtungslichtstrahl während des Abtastvorgangs entsprechend eines vorgebbaren Beleuchtungsschemas selektiv zugeschaltet. Für jedes Zuschalten einer Anregungswellenlänge wird der Detektor mindestens einmal ausgelesen und auf der Basis des bekannten Beleuchtungsschemas werden die detektierten Signale den Anregungswellen zugeordnet. Auf diese Weise ist es möglich, mit nur einem einzigen Scanvorgang für jede Anregungswellenlänge ein eigenes Bild aufzunehmen, wodurch die Zeit, die zur Aufnahme der getrennten Bilder benötigt wird, gegenüber dem bekannten sequentiellen Scan signifikant verkürzt ist. Darüber hinaus können mit dem erfindungsgemäßen Verfahren auch schnelle Prozesse innerhalb der Probe, beispielsweise biologische oder biochemische Prozesse, fehlerfrei aufgenommen werden, da die Bilder für die einzelnen Anregungswellenlängen praktisch zeitgleich aufgenommen werden.

In vorteilhafter Weise könnten als unterschiedliche Anregungswellenlängen diskrete Laserlinien verwendet werden. Die einzelnen Anregungswellenlängen ließen sich dem Beleuchtungslichtstrahl dann beispielsweise durch einfaches An- und Ausschalten des jeweiligen Lasers sehr einfach zuschalten.

Im Hinblick auf eine einfache Zuordnung der detektierten Signale zu den einzelnen Anregungswellenlängen könnte vorgesehen sein, dass sowohl der Zeitpunkt als auch die Zeitdauer des Zuschaltens jeder der Anregungswellenlängen in dem Beleuchtungsschema exakt festgelegt wird. Für eine präzise quantitative Untersuchung der Probe könnte des Weiteren die Intensität, mit der eine Anregungswellenlänge zugeschaltet wird, in dem Beleuchtungsschema für jede der Anregungswellenlängen individuell festgelegt werden.

Damit in der späteren Bildaufnahme der Probe jedes Pixel der Bildaufnahme Informationen von jeder der Anregungswellenlängen enthält, könnte das räumliche Fortschreiten des Beleuchtungslichtstrahls auf der Probe und das Beleuchtungsschema derart aufeinander abgestimmt werden, dass jede der Anregungswellenlängen dem Beleuchtungslichtstrahl innerhalb eines Pixels der Bildaufnahme der Probe mindestens einmal zugeschaltet ist. Sind für gewisse Probenbereiche bestimmte Anregungswellenlängen von besonderem Interesse, so könnten diese Anregungswellenlängen pro Pixel auch mehrmals zugeschaltet werden. Entsprechend könnte das Zuschalten bestimmter Anregungswellenlängen für Pixel, die mit "uninteressanten" Probenbereichen korrespondieren, auch vollständig unterbleiben.

In einer bevorzugten Ausgestaltung wird in dem Beleuchtungsschema eine sich über den Zeitverlauf des Abtastvorgangs hinweg regelmäßig wiederholende Abfolge des Zuschaltens der einzelnen Anregungswellenlängen festgelegt. Dabei könnten das räumliche Fortschreiten des Beleuchtungslichtstrahls auf der Probe und das Beleuchtungsschema derart aufeinander abgestimmt werden, dass ein kompletter Zyklus der sich wiederholenden Abfolge mit einem Pixel der Bildaufnahme der Probe korrespondiert. Hierdurch wird erreicht, dass die Pixel eines bestimmten Bildes einer konkreten Anregungswellenlänge unmittelbar miteinander vergleichbar sind, da alle Pixelinformationen aus jeweils derselben Bestrahlung resultieren. Dies gilt für jedes einzelne der aufgenommenen Bilder.

Anstelle eines einzigen vollständigen Zyklus wäre es ebenfalls denkbar, dass mehrere, vorzugsweise zwei oder drei Zyklen der sich wiederholenden Abfolge mit einem Pixel der Bildaufnahme der Probe korrespondieren. Durch eine derartige Abstimmung des räumlichen Fortschreitens des Beleuchtungslichtstrahls auf der Probe und des Beleuchtungsschemas aufeinander ließe sich pro Pixel eine höhere Beleuchtungsintensität und damit eine verbesserte Photonenstatistik realisieren.

Im Hinblick auf eine besonders einfache Zuordnung der detektierten Signale zu den einzelnen Anregungswellenlängen könnte dem Beleuchtungslichtstrahl zu jedem Zeitpunkt des Abtastvorgangs jeweils immer nur eine einzige Anregungswellenlänge zugeschaltet werden. Alternativ hierzu könnten dem Beleuchtungslichtstrahl zu vorgebbaren Zeitpunkten auch mehrere, vorzugsweise zwei Anregungswellenlängen gleichzeitig zugeschaltet werden. Durch diese Maßnahme könnte entweder bei gleicher Scangeschwindigkeit die Photonenstatistik verbessert werden oder bei gleicher Photonenstatistik die Geschwindigkeit des Scanvorgangs erhöht werden.

In Abhängigkeit des jeweils gewählten Beleuchtungsschemas könnte die Rekonstruktion der einzelnen Bilder der Probe mittels geeigneter Multiplikation, Summen- und/oder Differenzbildung der detektierten Signale durchgeführt werden. Im Allgemeinen wird zur Rekonstruktion der einzelnen Bilder das Lösen eines entsprechenden linearen Gleichungssystems notwendig sein. Zur Bereitstellung einer maximalen Informationsdichte in Bezug auf die untersuchte Probe könnten die für die verschiedenen Anregungswellenlängen rekonstruierten Bilder in einem Overlay angezeigt werden.

Als Detektor bieten sich beispielsweise ein Photomultiplier, eine APD (Avalanche Photodiode), ein MCP (Microchannel Plate Detector) oder auch Photodiodenarrays an. Wesentlich ist in diesem Zusammenhang eine ausreichend hohe Geschwindigkeit des Detektors, so dass dieser für jedes Zuschalten einer Anregungswellenlänge (mindestens einmal) ausgelesen werden kann.

In einer besonders bevorzugten Ausführung könnte die Lichtintensität und/oder die Zeitdauer des Zuschaltens einer Anregungswellenlänge über den Zeitverlauf des Abtastvorgangs hinweg variiert werden. So könnten bestimmte Laserlinien beispielsweise in ROIs (Regions of Interest), d.h. in lokal begrenzten Bereichen der Probe, die aus bestimmten Gründen von besonderem Interesse sind, stärker oder schwächer zugeschaltet werden bzw. auch vollkommen ausgeschaltet werden.

Die Variation der Lichtintensität und/oder der Zeitdauer könnte dabei bereits vor einer Messung festgelegt werden. Im Hinblick auf eine hohe Flexibilität des Verfahrens könnte die Variation auch während einer Messung festgelegt werden und damit aktiv auf bestimmte vorgebbare Messdaten reagiert werden. Erscheint beispielsweise in den detektierten Signalen eine der Emissionswellenlängen mit zu geringer Intensität, so könnte während des Messvorgangs die Intensität der entsprechenden Anregungswellenlänge erhöht werden oder im umgekehrten Fall erniedrigt werden. Eine entsprechende Variation von Lichtintensität und/oder Zeitdauer könnte auch mit Hilfe von Entscheidungskriterien durchgeführt werden, die durch Bildverarbeitung aus den extrahierten Daten des momentanen Bildes oder vorhergegangener Bilder gewonnen wurden.

In vorrichtungsmäßiger Hinsicht wird die eingangs genannte Aufgabe durch die Merkmale des Patentanspruchs 10 gelöst. Vorzugsweise dient die erfindungsgemäße Vorrichtung zur Durchführung eines Verfahrens nach einem der Ansprüche 1 bis 16, so dass zur Vermeidung von Wiederholungen auf den vorigen Teil der Beschreibung verwiesen wird.

Im Konkreten könnte das Zuschalten einer Anregungswellenlänge mittels eines AOTF (Acousto Optical Tunable Filter), eines AOM (akustooptischer Modulator), eines EOM (elektrooptischer Modulator), eines mechanischen Shutters oder mittels direkter Ansteuerung des Lasers erfolgen. Eine direkte Ansteuerung des Lasers ist insbesondere vorteilhaft bei Halbleiterlasern, da sich bei diesen Schaltfrequenzen im GHz-Bereich realisieren lassen.

Die Lichtintensität der zugeschalteten Anregungswellenlängen könnte in herkömmlicher Weise über eine Einstelleinheit mittels eines Abschwächers, eines Filters, eines AOTF, eines AOM, eines EOM oder dergleichen einstellbar sein. Des Weiteren könnte die Intensität auch über den Duty-Cycle oder die Anzahl der Wiederholungen eines Zyklus pro Pixel wie oben beschrieben einstellbar sein. In ganz besonders vorteilhafter Weise ließe sich die Einstelleinheit zur kontinuierlichen Einstellung der Lichtintensität, beispielsweise in Form eines AOTF, mit einer digitalen Schaltung zum Zuschalten der einzelnen Anregungswellenlängen koppeln.

In weiter vorteilhafter Weise könnte eine Recheneinheit zur zeitlichen Zuordnung des Zuschaltens einer Anregungswellenlänge und dem Auslesen des Detektors vorgesehen sein. Die Recheneinheit könnte zudem die Zuordnung der detektierten Signale zu den unterschiedlichen Anregungswellenlängen steuern. Bei der Recheneinheit könnte es sich im Konkreten beispielsweise um eine CPU, einen DSP, ein FPGA oder ein Treiberboard handeln.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 17 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in Form eines Diagramms ein erstes Ausführungsbeispiel eines Beleuchtungsschemas eines erfindungsgemäßen Verfahrens zum Trennen unterschiedlicher Emissionswellenlängen in einem Scanmikroskop,
- Fig. 2: in Form eines Diagramms ein zweites Ausführungsbeispiel eines Beleuchtungsschemas eines erfindungsgemäßen Verfahrens,
- Fig. 3: ebenfalls in Diagrammform ein drittes Ausführungsbeispiel eines Beleuchtungsschemas eines erfindungsgemäßen Verfahrens,
- Fig. 4: in schematischer Darstellung ein Ausführungsbeispiel einer erfindungsgemäßen Vorrichtung zum Trennen unterschiedlicher Emissionswellenlängeri in einem Scanmikroskop und
- Fig. 5: in schematischer Darstellung die Vorrichtung aus Fig. 4 mit einer zusätzlichen Einheit für Lineares Unmixing.

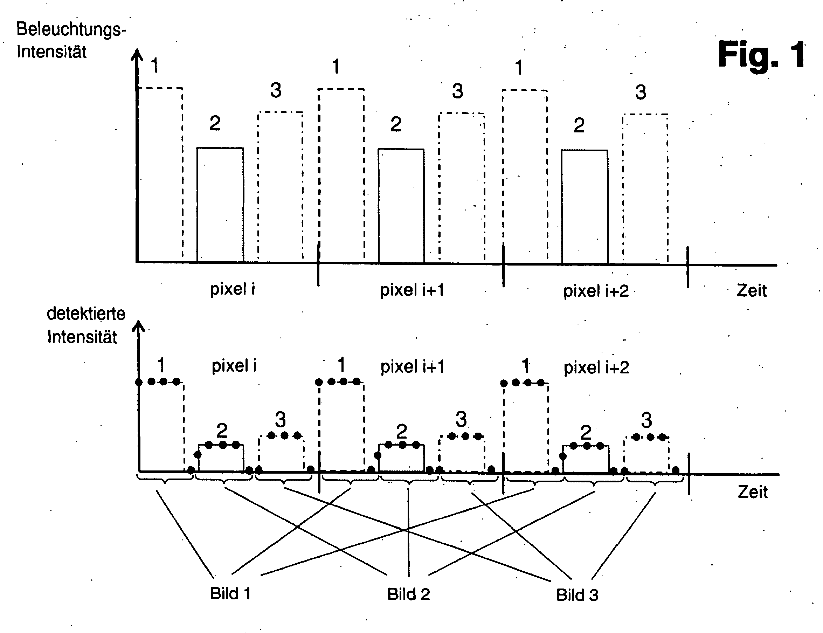

Fig. 1 zeigt zwei Diagramme, wobei im oberen Diagramm die Beleuchtungsintensität der Probe 4 im Zeitverlauf des Scanvorgangs dargestellt ist. Die Probe 4 wird mit insgesamt drei Anregungswellenlängen 1, 2, 3 entsprechend eines vorgebbaren Beleuchtungsschemas bestrahlt. In dem in Fig. 1 dargestellten Ausführungsbeispiel ist ein Beleuchtungsschema gewählt, das eine sich über den Zeitverlauf des Abtastvorgangs hinweg regelmäßig wiederholende Abfolge der zugeschalteten Anregungswellenlängen 1, 2, 3 zeigt. Dabei ist die sich wiederholende Abfolge derart gewählt, dass jeweils ein Zyklus der Abfolge mit einem Pixel der späteren Bildaufnahme korrespondiert.

Das untere Diagramm zeigt über den Zeitverlauf des Abtastvorgangs hinweg die detektierte Intensität der zu den Anregungswellenlängen 1, 2, 3 korrespondierenden Emissionswellenlängen. Der Detektor 5 wird für jede zugeschaltete Anregungswellenlänge 1, 2, 3 separat ausgelesen. Das Auslesen des Detektors 5 ist in dem Diagramm durch die dunklen Punkte symbolisiert. Die detektierten Signale werden erfindungsgemäß unter Ausnutzung des bekannten Beleuchtungsschemas den Anregungswellenlängen 1, 2, 3 zugeordnet. Wie in dem unteren Diagramm deutlich zu erkennen ist, kann auf diese Weise für jede einzelne der Anregungswellenlängen 1, 2, 3 ein eigenes Bild pixelweise zusammengesetzt werden.

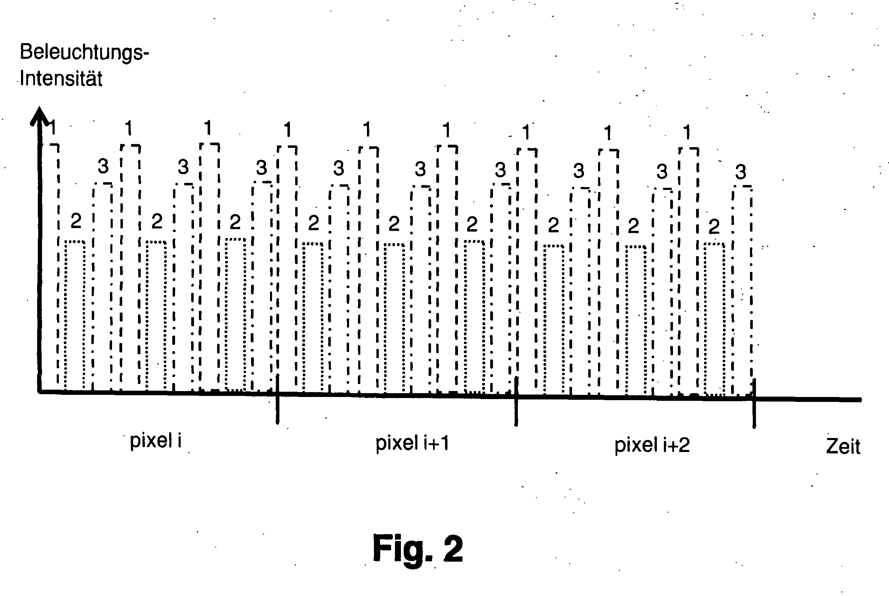

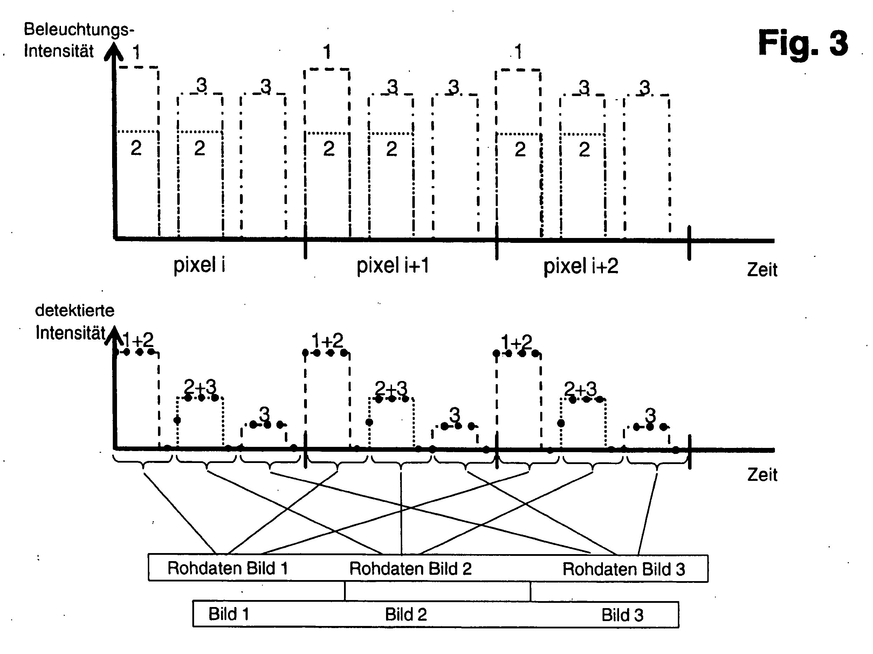

Fig. 2 zeigt ebenfalls in Diagrammform ein Beleuchtungsschema ähnlich dem in Fig. 1. Die Probe 4 wird wiederum mit einer sich über den Zeitverlauf des Abtastvorgangs hinweg regelmäßig wiederholenden Abfolge der drei Anregungswellenlängen 1, 2, 3 bestahlt. Der einzige Unterschied zu dem Ausführungsbeispiel in Fig. 1 besteht darin, dass das Zuschalten der einzelnen Anregungswellenlängen 1, 2, 3 derart erfolgt, dass insgesamt drei vollständige Zyklen der sich wiederholenden Abfolge einem Pixel der Bildaufnahme der Probe 4 entsprechen. Durch das dreimalige Zuschalten jeder einzelnen Wellenlänge 1, 2, 3 pro Pixel wird die Probe 4 zum einen gleichmäßiger beleuchtet und lässt sich zum anderen pro Pixel eine höhere Quantenstatistik für jede der Anregungswellenlängen 1, 2, 3 erzielen.

In Fig. 3 ist in dem oberen Diagramm wiederum die Beleuchtungsintensität in Abhängigkeit vom zeitlichen Verlauf des Abtastvorgangs dargestellt. Im Unterschied zu den Beleuchtungsschemata der Fig. 1 und 2 wird die Probe 4 in diesem Ausführungsbeispiel teilweise mit zwei unterschiedlichen Anregungswellenlängen 1, 2, 3 gleichzeitig beleuchtet. Im Konkreten wird die Probe 4 zunächst mit einer Kombination der beiden Anregungswellenlängen 1 und 2 bestrahlt. Daran schließt sich eine Beleuchtung mit beiden Anregungswellenlängen 2 und 3 an, und schließlich wird ausschließlich mit der Anregungswellenlänge 3 beleuchtet. Diese Abfolge wiederholt sich regelmäßig, wobei wiederum ein kompletter Zyklus mit einem Pixel der Bildaufnahme korrespondiert.

Im unteren Diagramm ist erneut die detektierte Intensität in Abhängigkeit vom zeitlichen Verlauf des Abtastvorgangs gezeigt. Jeder der dunklen Punkte kennzeichnet das Auslesen des Detektors 5. Zur Erzeugung getrennter Bilder für die einzelnen Anregungswellenlängen 1, 2, 3 werden die detektierten Signale zunächst vorsortiert. Die während der Beleuchtung mit den Anregungswellenlängen 1 und 2 gewonnenen Signale werden zu Rohdaten für Bild 1 gruppiert, die für die Beleuchtung mit den Anregungswellenlängen 2 und 3 gewonnenen Signale zu Rohdaten für Bild 2 und schließlich die während der Beleuchtung mit Anregungswellenlänge 3 aufgenommenen Signale zu Rohdaten für Bild 3 zusammengefasst. Die endgültigen Bilder für die einzelnen Anregungswellenlängen 1, 2, 3 lassen sich dann durch geeignete Multiplikation, Summen- und Differenzbildung der Rohdaten erzeugen. Im vorliegenden Fall ließe sich beispielsweise das Bild für Anregungswellenlänge 2 in einfacher Weise durch pixelweise Subtraktion der Rohdaten von Bild 3 von den Rohdaten für Bild 2 erzeugen. In einem weiteren Schritt ließe sich dann die Bildaufnahme für Anregungswellenlänge 1 rekonstruieren. Im Allgemeinen, d.h. bei komplizierteren Beleuchtungsschemata, muss zur Rekonstruktion der einzelnen Bilder ein entsprechendes lineares Gleichungssystem gelöst werden.

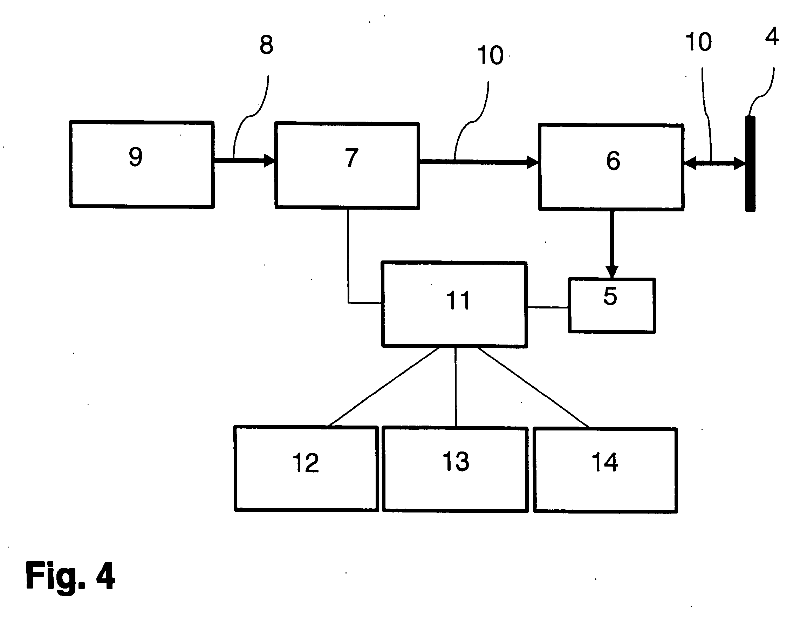

Fig. 4 zeigt schematisch ein Ausführungsbeispiel einer erfindungsgemäßen Vorrichtung zum Trennen unterschiedlicher Emissionswellenlängen in einem Scanmikroskop 6. Die Vorrichtung umfasst einen AOTF 7, der derart betrieben wird, dass aus dem Lichtstrahl 8 einer Lichtquelle 9 bestimmte Wellenlängen ausgeblendet und vorgebbare Anregungswellenlängen 1, 2, 3 durchgelassen werden. Mit anderen Worten wird der AOTF 7 dazu genutzt, dem Beleuchtungslichtstrahl 10 zeitgenau vorgebbare Anregungswellenlängen 1, 2, 3 zuzuschalten. Der so konstruierte Beleuchtungslichtstrahl 10 wird in das Mikroskop 6 eingekoppelt und mittels einer im Mikroskop 6 angeordneten Strahlablenkeinrichtung über die Probe 4 geführt.

Die von dem Detektor 5 aufgenommenen Signale werden einer zentralen Prozessoreinheit 11 zugeführt, welche die zeitliche Zuordnung zwischen dem Zuschalten der einzelnen Anregungswellenlängen 1, 2, 3 und der Detektion regelt. Die zentrale Prozessoreinheit 11 ist zudem für die Zuordnung der detektierten Signale zu den verschiedenen Anregungswellenlängen 1, 2, 3 verantwortlich. Die den einzelnen Anregungswellenlängen 1, 2, 3 zugeordneten Daten werden in separaten Datenkanälen 12, 13, 14 weiterverarbeitet, um schließlich für jede der Anregungswellenlängen 1, 2, 3 ein eigenes Bild der Probe 4 zu erzeugen.

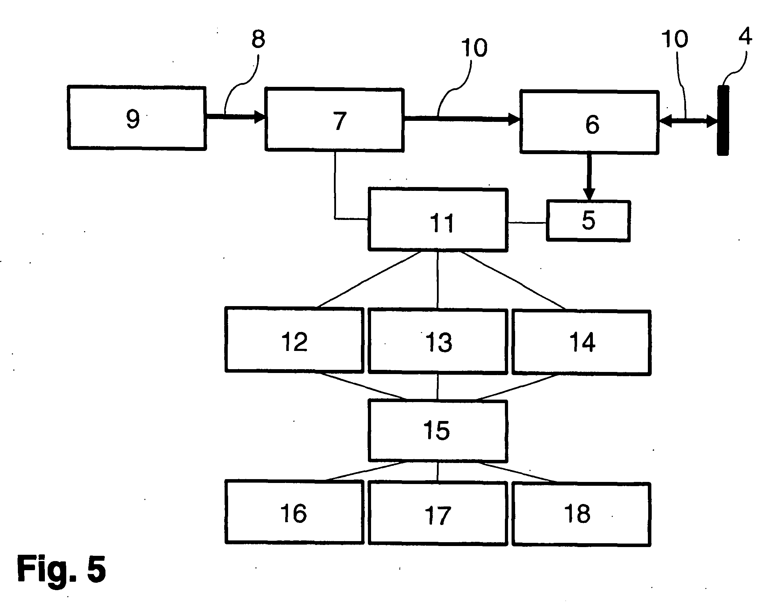

Fig. 5 zeigt in einer schematischen Darstellung im Wesentlichen die Vorrichtung aus Fig. 4 mit einer zusätzlichen Einheit 15, mit der ein Lineares Unmixing zur verbesserten Trennung der unterschiedlichen Fluoreszenzfarbstoffe 16, 17, 18 in der Probe 4 möglich ist. Ein derartiges Unmixing ist aus der Literatur hinreichend bekannt, und soll hier nicht näher beschrieben werden. Lediglich beispielhaft sei an dieser Stelle auf die DE 199 15 137 C2 und auf die US 6 066 459 hingewiesen.

Wird die Emission der Fluoreszenzfarbstoffe mittels mehrerer spektraler Detektoren oder Detektorkanäle aufgenommen, so kann sich das Lineare Unmixing der mittels des erfindungsgemäßen Verfahrens gewonnenen Daten in besonders vorteilhafter Weise simultan sowohl, auf die Anregungs- als auch auf die Emissionsspektren erstrecken.

Es sei angemerkt, dass sich die beschriebene Vorrichtung insbesondere auch für einen Einsatz in Kombination mit einem Spektraldetektor, einem Spektrometer, der Fluoreszenz-Lebensdauer-Mikroskopie, der Fluoreszenz-Korrelations-Spektroskopie oder ähnlichen Anwendungen eignet.

Abschließend sei ganz besonders hervorgehoben, dass die voranstehend erörterten Ausführungsbeispiele lediglich der beispielhaften Erörterung der beanspruchten Lehre dienen, diese jedoch nicht auf die Ausführungsbeispiele einschränken.

## Patentansprüche

1. Verfahren zum Trennen unterschiedlicher Emissionswellenlängen in einem Scanmikroskop (6), bei dem eine Probe (4) mit einem mittels einer Strahlablenkeinrichtung über die Probe (4) geführten Beleuchtungslichtstrahl (10) pixelweise abgetastet wird, wobei der Beleuchtungslichtstrahl (10) unterschiedliche Anregungswellenlängen (1, 2, 3) aufweist, und bei dem das von der Probe (4) ausgehende Emissionslicht, das mit den Anregungswellenlängen (1, 2, 3) korrespondierende Emissionswellenlängen enthält, in mindestens einem Detektor (5) nachgewiesen wird,
**dadurch gekennzeichnet, dass** die Anregungswellenlängen (1, 2, 3) dem Beleuchtungslichtstrahl (10) während des Abtastvorgangs jeweils pro Pixel entsprechend eines vorgebbaren Beleuchtungsschemas selektiv zugeschaltet werden, wobei das Beleuchtungsschema den Zeitpunkt und die Zeitdauer des Zuschaltens festlegt, dass der Detektor (5) über die Zeitdauer jeder zugeschalteten Anregungswellenlänge (1, 2, 3) ausgelesen wird, und dass ein Prozessor die detektierten Signale den Anregungswellenlängen (1, 2, 3) unter Ausnutzung des bekannten Beleuchtungsschemas zuordnet.

2. Verfahren nach Anspruch 1, **dadurch gekennzeichnet, dass** als unterschiedliche Anregungswellenlängen (1, 2, 3) diskrete Laserlinien verwendet werden, wobei die Anregungswellenlängen (1, 2, 3) dem Beleuchtungslichtstrahl (10) vorzugsweise durch An- und Ausschalten des jeweiligen Lasers zugeschaltet werden.

3. Verfahren nach Anspruch 1 oder 2, **dadurch gekennzeichnet, dass** mit dem Beleuchtungsschema der Zeitpunkt und die Zeitdauer des Zuschaltens jeder der Anregungswellenlängen (1, 2, 3) festgelegt wird und/oder dass mit dem Beleuchtungsschema die Intensität für jede der Anregungswellenlängen (1, 2, 3) individuell festgelegt wird.

4. Verfahren nach einem der Ansprüche 1 bis 3, **dadurch gekennzeichnet, dass** das räumliche Fortschreiten des Beleuchtungslichtstrahls (10) auf der Probe (4) und das Beleuchtungsschema derart aufeinander abgestimmt werden, dass jede der Anregungswellenlängen (1, 2, 3) dem Beleuchtungslichtstrahl (10) innerhalb eines Pixels der Bildaufnahme der Probe (4) mindestens einmal zugeschaltet ist.

5. Verfahren nach einem der Anspruche 1 bis 4, **dadurch gekennzeichnet, dass** mit dem Beleuchtungsschema eine sich über den Zeitverlauf des Abtastvorgangs hinweg regelmäßig wiederholende Abfolge des Zuschaltens der einzelnen Anregungswellenlängen (1, 2, 3) festgelegt wird, wobei das räumliche Fortschreiten des Beleuchtungslichtstrahls (10) auf der Probe (4) und das Beleuchtungsschema derart aufeinander abgestimmt werden können, dass ein kompletter Zyklus der sich wiederholende Abfolge mit einem Pixel der Bildaufnahme der Probe (4) korrespondiert, oder wobei das räumliche Fortschreiten des Beleuchtungslichtstrahls (10) auf der Probe (4) und das Beleuchtungsschema derart aufeinander abgestimmt werden können, dass mehrere, vorzugsweise zwei oder drei Zyklen der sich wiederholende Abfolge mit einem Pixel der Bildaufnahme der Probe (4) korrespondieren.

6. Verfahren nach einem der Ansprüche 1 bis 5, **dadurch gekennzeichnet, dass** dem Beleuchtungslichtstrahl (10) jeweils immer nur eine einzige Anregungswellenlänge (1, 2, 3) zugeschaltet wird.

7. Verfahren nach Anspruch 5 oder 6, **dadurch gekennzeichnet, dass** dem Beleuchtungslichtstrahl (10) innerhalb eines Zyklus zu vorgebbaren Zeitpunkten mehrere, vorzugsweise zwei Anregungswellenlängen (1, 2, 3) gleichzeitig zugeschaltet werden.

8. Verfahren nach einem der Ansprüche 1 bis 7, **dadurch gekennzeichnet, dass** die Rekonstruktion der einzelnen Bilder der Probe (4) mittels geeigneter Multiplikation, Summen- und/oder Differenzbildung der detektierten Signale durchgeführt wird, wobei die für verschiedene Anregungswellenlängen (1, 2, 3) rekonstruierten Bilder vorzugsweise in einem Overlay angezeigt werden.

9. Verfahren nach einem der Ansprüche 1 bis 8, **dadurch gekennzeichnet, dass** als Detektor (5) ein Photomultiplier, eine APD, ein MCP-Detektor, ein schnelles Photodiodenarray oder dergleichen eingesetzt werden und/oder dass die Lichtintensität und/oder die Zeitdauer des Zuschaltens einer Anregungswellenlänge (1, 2, 3) über den Zeitverlauf des Abtastvorgangs hinweg variiert werden, wobei die Variation der Lichtintensität und/oder der Zeitdauer vorzugsweise vor einer Messung oder in Abhängigkeit bestimmter vorgebbarer Messdaten vorzugsweise automatisch während einer Messung oder in Abhängigkeit von durch Bildverarbeitung aus den extrahierten Daten des momentanen Bildes und/oder vorhergehend aufgenommener Bilder gewonnenen Informationen festgelegt wird.

10. Scanmikroskop mit einer Vorrichtung zum Trennen unterschiedlicher Emissionswellenlängen, mit mindestens einer Lichtquelle (9) zur Erzeugung eines Beleuchtungslichtstrahls (10) mit unterschiedlichen Anregungswellenlängen (1, 2, 3), wobei eine Probe (4) mit dem mittels einer Strahlablenkeinrichtung über die Probe (4) geführten Beleuchtungslichtstrahl (10) pixelweise abtastbar ist, und mit mindestens einem Detektor (5) zum Nachweis des von der Probe (4) ausgehenden Emissionslichts, das mit den Anregungswellenlängen (1, 2, 3) korrespondierende Emissionswellenlängen enthält, insbesondere zur Durchführung des Verfahrens nach einem der Ansprüche 1 bis 9,
**dadurch gekennzeichnet, dass** die Anregungswellenlängen (1, 2, 3) dem Beleuchtungslichtstrahl (10) während des Abtastvorgangs jeweils pro Pixel entsprechend eines vorgebbaren Beleuchtungsschemas selektiv zuschaltbar sind, wobei das Beleuchtungsschema den Zeitpunkt und die Zeitdauer des Zuschaltens festlegt, dass der Detektor (5) über die Zeitdauer jeder zugeschalteten Anregungswellenlänge (1, 2, 3) auslesbar ist, und dass ein Prozessor die detektierten Signale den Anregungswellenlängen (1, 2, 3) unter Ausnutzung des bekannten Beleuchtungsschemas zuordnet.

11. Vorrichtung nach Anspruch 10, **dadurch gekennzeichnet, dass** das Zuschalten einer Anregungswellenlänge (1, 2, 3) mittels eines AOTF (7), eines AOM, eines EOM, eines mechanischen Shutters oder mittels direkter Ansteuerung eines Lasers erfolgt und/oder dass die Lichtintensität der zugeschalteten Anregungswellenlängen (1, 2, 3) mittels eines Abschwächers, eines Filters, eines AOTF (7), eines AOM, eines EOM oder dergleichen einstellbar ist, wobei der AOTF (7) zur kontinuierlichen Einstellung der Lichtintensität mit einer digitalen Schaltung zum Zuschalten der Anregungswellenlängen (1, 2, 3) gekoppelt sein kann.

12. Vorrichtung nach Anspruch 10 oder 11, **dadurch gekennzeichnet, dass** eine Recheneinheit (11) zur zeitlichen Zuordnung des Zuschaltens einer Anregungswellenlänge (1, 2, 3) und dem Auslesen des Detektors (5) vorgesehen ist, wobei die Recheneinheit (11) die Zuordnung der detektierten Signale zu den unterschiedlichen Anregungswellenlängen (1, 2, 3) steuern kann und eine CPU, ein DSP, ein FPGA, ein Treiberboard oder dergleichen sein kann.

13. Vorrichtung nach einem der Ansprüche 10 bis 12, **dadurch gekennzeichnet, dass** der Detektor (5) ein Photomultiplier, eine APD, ein MCP-Detektor, ein schnelles Photodiodenarray oder dergleichen ist.

## Claims

1. Method for separating different emission wavelengths in a scanning microscope (6), in which a specimen (4) is scanned pixel-by-pixel with an illuminating light beam (10) passed over the specimen (4) by means of a beam deflecting device, the illuminating light beam (10) having different excitation wavelengths (1, 2, 3), and in which the emission light coming from the specimen (4), which light includes emission wavelengths corresponding to the excitation wavelengths (1, 2, 3), is detected in at least one detector (5),
**characterised in that** the excitation wavelengths (1, 2, 3) are selectively applied to the illuminating light beam (10) during the scanning operation, per pixel in each case, according to a predefinable illumination scheme, the illumination scheme specifying the point in time and the duration of application, the detector (5) is read out over the duration of each applied excitation wavelength (1, 2, 3), and a processor associates the detected signals with the excitation wavelengths (1, 2, 3) using the known illumination scheme.

2. Method according to claim 1, **characterised in that** discrete laser lines are used as different excitation wavelengths (1, 2, 3), the excitation wavelengths (1, 2, 3) being applied to the illuminating light beam (10) preferably by switching the respective laser on and off.

3. Method according to claim 1 or 2, **characterised in that** the illumination scheme specifies the point in time and the duration of the application of each of the excitation wavelengths (1, 2, 3) and/or the illumination scheme specifies the intensity for each of the excitation wavelengths (1, 2, 3) individually.

4. Method according to any one of claims 1 to 3, **characterised in that** the spatial progression of the illuminating light beam (10) over the specimen (4) and the illumination scheme are coordinated with each other in such a manner that each of the excitation wavelengths (1, 2, 3) is applied to the illuminating light beam (10) at least once within a pixel of the image recording of the specimen (4).

5. Method according to any one of claims 1 to 4, **characterised in that** the illumination scheme specifies a sequence of application of the individual excitation wavelengths (1, 2, 3) which regularly recurs over the time course of the scanning operation, wherein the spatial progression of the illuminating light beam (10) over the specimen (4) and the illumination scheme are coordinated with each other in such a manner that a complete cycle of the recurring sequence corresponds to a pixel of the image recording of the specimen (4), or wherein the spatial progression of the illuminating light beam (10) over the specimen (4) and the illumination scheme are coordinated with each other in such a manner that a plurality of, preferably two or three, cycles of the recurring sequence correspond to a pixel of the image recording of the specimen (4).

6. Method according to any one of claims 1 to 5, **characterised in that** only a single excitation wavelength (1, 2, 3) is applied at any one time to the illuminating light beam (10).

7. Method according to claim 5 or 6, **characterised in that** a plurality of, preferably two, excitation wavelengths (1, 2, 3) are simultaneously applied to the illuminating light beam (10) at predefinable points in time within a cycle.

8. Method according to any one of claims 1 to 7, **characterised in that** the reconstruction of the individual images of the specimen (4) is carried out by means of suitable multiplication, summing and/or subtraction of the detected signals, the images reconstructed for various excitation wavelengths (1, 2, 3) preferably being shown in an overlay.

9. Method according to any one of claims 1 to 8, **characterised in that** a photomultiplier, an APD, an MCP detector, a fast photodiode array or the like is used as detector (5) and/or the light intensity and/or the duration of application of an excitation wavelength (1, 2, 3) is/are varied over the time course of the scanning operation, wherein the variation of the light intensity and/or of the duration is specified preferably before a measurement or in dependence upon specific predefinable measuring data preferably automatically during a measurement or in dependence upon information obtained by image processing from the extracted data of the instantaneous image and/or of preceding recorded images.

10. Scanning microscope having a device for separating different emission wavelengths, comprising at least one light source (9) for generating an illuminating light beam (10) having different excitation wavelengths (1, 2, 3), wherein a specimen (4) can be scanned pixel-by-pixel with the illuminating light beam (10) passed over the specimen (4) by means of a beam deflecting device, and comprising at least one detector (5) for detecting the emission light coming from the specimen (4), which light includes emission wavelengths corresponding to the excitation wavelengths (1, 2, 3), especially for performing the method according to any one of claims 1 to 9,
**characterised in that** the excitation wavelengths (1, 2, 3) can be applied selectively to the illuminating light beam (10) during the scanning operation, per pixel in each case, according to a predefinable illumination scheme, the illumination scheme specifying the point in time and the duration of application, the detector (5) is read out over the duration of each applied excitation wavelength (1, 2, 3), and a processor associates the detected signals with the excitation wavelengths (1, 2, 3) using the known illumination scheme.

11. Apparatus according to claim 10, **characterised in that** the application of an excitation wavelength (1, 2, 3) is effected by means of an AOTF (7), an AOM, an EOM, a mechanical shutter or by means of direct activation of a laser and/or the light intensity of the applied excitation wavelengths (1, 2, 3) is adjustable by means of an attenuator, a filter, an AOTF (7), an AOM, an EOM or the like, wherein, for continuous adjustment of the light intensity, the AOTF (7) may be coupled to a digital circuit for application of the excitation wavelengths (1, 2, 3).

12. Apparatus according to claim 10 or 11, **characterised in that** a computational unit (11) is provided for the temporal association of the application of an excitation wavelength (1, 2, 3) and the reading-out of the detector (5), wherein the computational unit (11) is able to control the association of the detected signals with the different excitation wavelengths (1, 2, 3) and may be a CPU, A DSP, an FPGA, a driver board or the like.

13. Apparatus according to any one of claims 10 to 12, **characterised in that** the detector (5) is a photomultiplier, an APD, an MCP detector, a fast photodiode array or the like.

## Revendications

1. Procédé pour la séparation de différentes longueurs d'onde d'émission dans un microscope à balayage (6), dans lequel une éprouvette (4) est explorée pixel par pixel par un faisceau de lumière d'éclairage (10) guidé au-dessus de l'éprouvette (4) au moyen d'un dispositif de balayage de faisceau, le faisceau de lumière d'éclairage (10) présentant différentes longueurs d'onde d'excitation (1, 2, 3), et dans lequel la lumière d'émission sortant de l'éprouvette (4), qui contient des longueurs d'onde d'émission correspondant aux longueurs d'onde d'excitation (1, 2, 3), est mise en évidence dans au moins un détecteur (5),
**caractérisé par le fait que** les longueurs d'onde d'excitation (1, 2, 3) sont raccordées sélectivement au faisceau de lumière d'éclairage (10) pendant le processus d'exploration respectivement par pixel en correspondance d'un schéma d'éclairage pouvant être prédéfini, le schéma d'éclairage fixant l'instant et la durée du raccordement, que le détecteur (5) est lu pendant la durée de chacune des longueurs d'onde d'excitation (1, 2, 3) raccordées et qu'un processeur adjoint les signaux détectés aux longueurs d'onde d'excitation (1, 2, 3) sous exploitation du schéma d'éclairage.

2. Procédé selon la revendication 1,
**caractérisé par le fait que** des lignes laser discrètes sont utilisées en tant que différentes longueurs d'onde d'excitation (1, 2, 3), les longueurs d'onde d'excitation (1, 2, 3) étant raccordées au faisceau de lumière d'éclairage (10) de préférence par mise en et hors circuit du laser respectif.

3. Procédé selon la revendication 1 ou 2,
**caractérisé par le fait que** l'instant et la durée de chacune des longueurs d'onde d'excitation (1, 2, 3) sont déterminés par le schéma d'éclairage et/ou que l'intensité pour chacune des longueurs d'onde d'excitation (1, 2, 3) est fixée individuellement par le schéma d'éclairage.

4. Procédé selon l'une des revendications 1 à 3,
**caractérisé par le fait que** la progression dans l'espace du faisceau de lumière d'éclairage (10) sur l'éprouvette (4) et le schéma d'éclairage sont adaptés l'un à l'autre de telle manière que chacune des longueurs d'onde d'excitation (1, 2, 3) est raccordée au moins une fois à l'intérieur d'un pixel de prise de vue de l'éprouvette (4).

5. Procédé selon l'une des revendications 1 à 4,
**caractérisé par le fait qu'**une succession du raccordement des longueurs d'onde d'excitation (1, 2, 3) se répétant régulièrement en s'éloignant sur le cours du temps est fixée par le schéma d'éclairage, la progression dans l'espace du faisceau de lumière d'éclairage (10) sur l'éprouvette (4) et le schéma d'éclairage pouvant être accordés l'un à l'autre de telle manière qu'un cycle complet de la succession se répétant correspond à un pixel de la prise de vue de l'éprouvette (4), ou bien la progression dans l'espace du faisceau de lumière d'éclairage (10) sur l'éprouvette (4) et le schéma d'éclairage pouvant être adaptés l'un à l'autre de telle manière que plusieurs, de préférence deux ou trois, cycles de la succession se répétant correspondent à un pixel de la prise de vue de l'éprouvette (4).

6. Procédé selon l'une des revendications 1 à 5,
**caractérisé par le fait que** seulement une longueur d'onde d'excitation (1, 2, 3) unique est toujours raccordée respectivement au faisceau de lumière d'éclairage (10).

7. Procédé selon la revendication 5 ou 6,
**caractérisé par le fait que** plusieurs, de préférence deux, longueurs d'onde d'excitation (1, 2, 3) sont raccordées simultanément au faisceau de lumière d'éclairage (10) à l'intérieur d'un cycle à des instants pouvant être prédéterminés.

8. Procédé selon l'une des revendications 1 à 7,
**caractérisé par le fait que** la reconstruction des images individuelles de l'éprouvette (4) est effectuée par formation appropriée de multiplications, sommes et/ou différences des signaux détectés, les images reconstruites pour diverses longueurs d'onde d'excitation (1, 2, 3) étant affichées de préférence dans un overlay.

9. Procédé selon l'une des revendications 1 à 8,
**caractérisé par le fait qu'**un photomultiplicateur, un APD, un détecteur MCP, un réseau rapide de photodiodes ou similaire est mis en oeuvre en tant que détecteur (5) et/ou que l'intensité lumineuse et/ou la durée du raccordement d'une longueur d'onde d'excitation (1, 2, 3) peut varier en s'éloignant au cours du temps du processus de balayage, la variation de l'intensité et/ou de la durée étant fixée, de préférence avant une mesure ou en dépendance de données de mesures déterminées pouvant être prédéfinies, de préférence automatiquement avant une mesure ou en dépendance d'informations produites par traitement d'image à partir des données extraites de l'image momentanée et/ou des images prises précédemment.

10. Microscope à balayage avec un dispositif pour la séparation de différentes longueurs d'onde d'émission, avec au moins une source lumineuse (9) pour engendrer un faisceau de lumière d'éclairage (10) avec différentes longueurs d'onde d'excitation (1, 2, 3), une éprouvette (4) pouvant être balayée pixel par pixel par le faisceau de lumière d'éclairage (10) guidé au-dessus de l'éprouvette (4) au moyen d'un dispositif de balayage de faisceau, et avec au moins un détecteur (5) pour la mise en évidence de la lumière d'émission sortant de l'éprouvette (4), qui contient des longueurs d'onde d'émission correspondant aux longueurs d'onde d'excitation (1, 2, 3), en particulier pour la mise en oeuvre du procédé selon l'une des revendications 1 à 9,
**caractérisé par le fait que** les longueurs d'onde d'excitation (1, 2, 3) peuvent être raccordées sélectivement au faisceau de lumière d'éclairage (10) pendant le processus d'exploration respectivement par pixel en correspondance d'un schéma d'éclairage pouvant être prédéfini, le schéma d'éclairage fixant l'instant et la durée du raccordement, que le détecteur (5) peut être lu pendant la durée de chacune des longueurs d'onde d'excitation (1, 2, 3) raccordées et qu'un processeur adjoint les signaux détectés des longueurs d'onde d'excitation (1, 2, 3) sous exploitation du schéma d'éclairage connu.

11. Dispositif selon la revendication 10,
**caractérisé par le fait que** le raccordement d'une longueur d'onde d'excitation (1, 2, 3) a lieu au moyen d'un AOTF (7), d'un AOM, d'un EOM, d'un obturateur mécanique ou au moyen d'une excitation directe d'un laser et/ou que l'intensité lumineuse des longueurs d'onde d'excitation (1, 2, 3) raccordées peut être réglée au moyen d'un affaiblisseur, d'un filtre, d'un AOTF (7), d'un AOM, d'un EOM ou similaire, l'AOTF (7) pouvant être couplé pour le réglage continu de l'intensité lumineuse à un circuit numérique pour le raccordement des longueurs d'onde d'excitation (1, 2, 3).

12. Dispositif selon la revendication 10 ou 11,
**caractérisé par le fait qu'**une unité de calcul (11) est prévue pour l'adjonction chronologique d'une longueur d'onde d'excitation (1, 2, 3) et l'extraction du détecteur (5), l'unité de calcul (11) pouvant commander l'adjonction des signaux détectés aux différentes longueurs d'onde d'excitation (1, 2, 3) et pouvant être une unité centrale, un DSP, un FPGA, une plaque excitatrice ou similaire.

13. Dispositif selon l'une des revendications 10 à 12,
**caractérisé par le fait que** le détecteur (5) est un photomultiplicateur, un APD, un détecteur MCP, un réseau rapide de photodiodes ou similaire.
